# EUROPEAN PATENT SPECIFICATION

(11) **EP 3 301 969 B1**
(45) Date of publication and mention of the grant of the patent: **18.12.2019**
(21) Application number: 16818098.2
(22) Date of filing: 21.03.2016
(51) Int. Cl.: H04W 12/06, H04W 28/02, H04W 88/06, H04W 76/10, H04W 8/20

(54) **NETWORK DEVICE AND TERMINAL FOR MULTI-NET AGGREGATION TRANSMISSION, AND OPERATING METHOD THEREOF**
NETZWERKVORRICHTUNG UND ENDGERÄT FÜR MULTINETZWERKAGGREGATIONSÜBERTRAGUNG UND BETRIEBSVERFAHREN DAFÜR
DISPOSITIF DE RÉSEAU ET TERMINAL POUR TRANSMISSION À REGROUPEMENT DE RÉSEAUX MULTIPLES, ET SON PROCÉDÉ DE FONCTIONNEMENT

(30) Priority: 29.06.2015 KR 20150092490; 16.02.2016 KR 20160018033
(43) Date of publication of application: 04.04.2018
(73) Proprietor: KT Corporation, Seongnam-si, Gyeonggi-do 13606 (KR)
(72) Inventor: JOH, Han Jin, Seongnam-si Gyeonggi-do 13617 (KR); JEUNG, Youn-pil, Seoul 07261 (KR); SEO, Sunghoon, Seoul 06081 (KR); OH, Hong Suk, Seoul 06352 (KR)
(74) Representative: Regimbeau
(86) International application number: PCT/KR2016/002814
(87) International publication number: WO 2017/003065

(56) References cited:
- WO-A1-2012/154506
- WO-A1-2014/044333
- WO-A1-2015/150875
- WO-A2-2011/065708
- WO-A2-2011/136581
- KR-A- 20130 006 385
- KR-A- 20140 081 497
- US-A1- 2013 195 004

## Description

### [Technical Field]

The present disclosure relates to multinet aggregation.

### [Background Art]

An aggregation transmission is a technology of simultaneously using a plurality of communication networks to transmit data and processes data transmitted to each path in one session. Based on the aggregation transmission technology, a terminal may be connected to a plurality of communication networks at one time and one service / application aggregates a plurality of networks like one network independent of a kind of network or the number of networks to perform communication. Therefore, an aggregation transmission system may use a plurality of available network resources to quickly transmit and receive a large amount of data. Aggregation of a plurality of networks may be called multinet aggregation.

Among the aggregation transmission technologies, there is a multi-path TCP (MPTCP) technology of grouping and using several TCP flows. The MPTCP is an L4 technology for simultaneously using a plurality of IP interfaces.

A terminal including a plurality of physical interfaces may be connected to a plurality of communication networks at one time by the MPTCP technology and generates a session in a subflow unit to perform end-to-end communication. As such, research into a technology of simultaneously using a plurality of communication networks to transmit data has progressed but all the servers cannot yet support multi-path communication. Therefore, there is a limitation in that a terminal including a multiple communication interface is hard to perform the multi-path communication with all servers.

WO2012/154506 and WO2014/044333 provide mechanisms for a multinet aggregation service.

### [DISCLOSURE]

### [Technical Problem]

The present disclosure provides a network apparatus and a terminal for providing a multinet aggregation service and an operating method thereof.

### [Technical Solution]

The present invention is directed to subject-matter as disclosed by the appended claims.

### [Advantageous Effects]

According to an exemplary embodiment of the present disclosure, the gateway providing the multinet aggregation service may provide the user authentication result and the server connection result to the terminal, such that the terminal may maintain or release the multinet aggregation service setting based on the received result. Further, according to an exemplary embodiment of the present disclosure, the user may recognize the connection status on the multinet aggregation service based on the user authentication result and the server connection result provided from the gateway to easily understand whether the terminal is in the multinet aggregation service possible status.

### [Description of the Drawings]

FIG. 1 is a conceptual diagram describing a network aggregation transmission according to an exemplary embodiment of the present disclosure.
FIG. 2 is a diagram describing a configuration diagram of a multinet aggregation system according to an exemplary embodiment of the present disclosure.
FIG. 3 is a diagram describing a multinet aggregation transmission according to an exemplary embodiment of the present disclosure.
FIG. 4 is a diagram exemplarily illustrating a multinet aggregation service setting screen in a terminal according to the exemplary embodiment of the present disclosure.
FIG. 5 is a diagram exemplarily illustrating a traffic flow according to an exemplary embodiment of the present disclosure.
FIG. 6 is a flow chart of a method for a multinet aggregation service of a terminal according to an exemplary embodiment of the present disclosure.
**FIG. 7** is a flow chart of a gateway connection method of a terminal according to an exemplary embodiment of the present disclosure.
**FIG. 8** is a flow chart of a method for releasing an **MPTCP** connection according to an exemplary embodiment of the present disclosure.
**FIG. 9** is a flow chart of a method for releasing authentication of a multinet aggregation service according to an exemplary embodiment of the present disclosure.
**FIG. 10** is a flow chart of a processing method upon a proxy connection 10 error of a terminal according to an exemplary embodiment of the present disclosure.
**FIG. 11** is a hardware block diagram of a terminal according to an exemplary embodiment of the present disclosure.

### [Mode for Invention]

In the following detailed description, only certain exemplary embodiments of the present disclosure have been shown and described, simply by way of illustration. As those skilled in the art would realize, the described embodiments may be modified in various different ways, all without departing from the scope of the present disclosure. Accordingly, the drawings and description are to be regarded as illustrative in nature and not restrictive.

Like reference numerals designate like elements throughout the specification. Throughout the specification, unless explicitly described to the contrary, the word "comprise" and variations such as "comprises" or "comprising" will be understood to imply the inclusion of stated elements but not the exclusion of any other elements. In addition, the terms "-er", "-or" and "module" described in the specification mean units for processing at least one function and operation and can be implemented by hardware components or software components and combinations thereof.

In the specification, a terminal may designate a mobile station (MS), a mobile terminal (MT), a subscriber station (SS), a portable subscriber station (PSS), user equipment (UE), an access terminal (AT), or the like, and may include functions of all or a part of the mobile station, the mobile terminal, the subscriber station, the portable subscriber station, the user equipment, the access terminal, or the like.

The terminal of the specification may access a network apparatus such as a base station (BS), an access point (AP), a radio access station (RAS), a node B, an evolved node B (eNodeB), a base transceiver station (BTS), and a mobile multihop relay (MMR)-BS to be connected to a remote server.

The terminal of the specification is a mobile terminal such as a smart phone, tablet terminals such as a smart pad and a tablet PC, and various types of communication terminals such as a computer and a television and may include a plurality of communication interfaces.

The communication interface may be diverse. For example, the communication interface may include wireless local area network interfaces such as WiFi / WLAN / Bluetooth and mobile communication network interfaces such as 3G / long term evolution (LTE) / long term evolution-advanced (LTE-A) and terminal makers may add various communication interfaces. The present specification describes, by way of example, the WiFi interface and the 3G / LTE interface but the communication interface is not limited thereto.

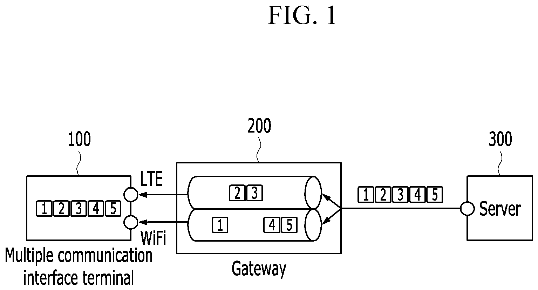

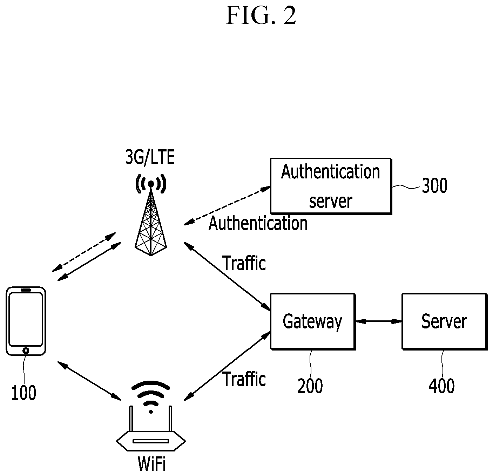

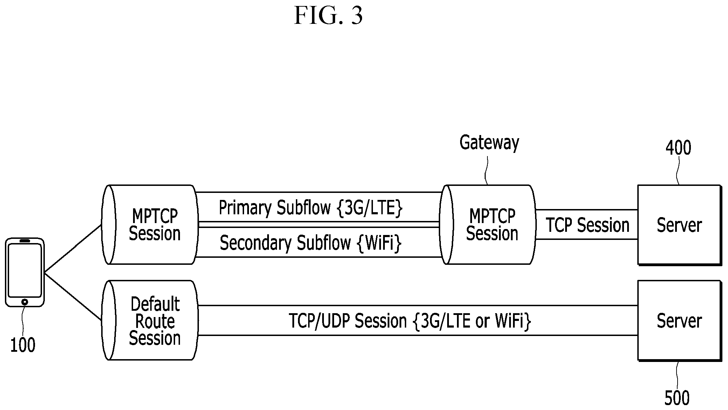

FIG. 1 is a conceptual diagram describing a network aggregation transmission according to an exemplary embodiment of the present disclosure, FIG. 2 is a diagram describing a configuration diagram of a multinet aggregation system according to an exemplary embodiment of the present disclosure, and FIG. 3 is a diagram describing a multinet aggregation transmission according to an exemplary embodiment of the present disclosure.

Referring to FIG. 1, a multinet aggregation transmission is a technology of aggregating a plurality of communication networks to transmit data and may split and transmit data transmitted through one path into paths for a plurality of homogenous networks or a plurality of heterogeneous networks or bind and transmit data transmitted through a plurality of paths into one path. The multinet aggregation transmission simultaneously transmits data to the plurality of paths and therefore may be called a multi-path transmission.

Referring to FIG. 2, a multinet aggregation system includes a terminal 100, a gateway 200 connected to the terminal 100 through a plurality of networks, and an authentication server 300.

The terminal 100 includes a multiple communication interface and may be connected to a plurality of networks (for example, WiFi network and 3G / LTE network) through the multiple communication interface at one time.

The terminal 100 has a management application embedded therein. The management application may help a user access the terminal 100 to set or manage a multiple network access. The management application may be called a GiGA LTE manager by way of example.

The terminal 100 includes a network agent that performs authentication, status management, and traffic processing for the multinet aggregation, in which the network agent may be implemented as a terminal internal logic. The network agent and various applications in the terminal 100 perform socket communication. The network agent interworks with an authentication server 300 and a gateway 200 according to setting information of the management application for network management. In detail, the network agent includes an authentication server interworking unit implementing an interworking function with the authentication server 300 and a gateway interworking unit implementing an interworking function with the gateway 200. The interworking function with the authentication server 300 may be implemented as a TCP / IP protocol and the interworking function with the gateway 200 may be implemented as a socket secure (SOCKS) protocol. The SOCKS is a protocol used to pass a proxy server when performing TCP / UDP communication between a server and a client. Here, the network agent may be called a multinet aggregation (MA) agent.

The gateway 200 is a network apparatus that aggregates subflows transmitted to a multi-path or splits and transmits a flow transmitted to a single path into the subflows of the multi-path. The gateway 200 is located at a contact of the multinet, for example a contact of the LTE network with the WiFi network. Here, the gateway 200 may be called a multinet aggregation-gateway (MA-GW).

The gateway 200 splits data to transmit the received data to the multiple communication interface of the terminal 100. Further, the gateway 200 may transmit some data to the terminal 100 through the LTE network and the rest of the data to the terminal 100 through the WiFi network. The terminal 100 aggregates data received through a plurality of communication interfaces. In a similar method, the gateway 200 may aggregate the data transmitted by the terminal 100 through the multiple communication interface and transmit the aggregated data to the server 400.

The authentication server 300 determines whether the terminal 100 is in a multinet aggregation service possible status to authenticate the terminal. The authentication server 300 provides access information (IP address, port value, etc.) of the gateway to the terminal 100 to help the authenticated terminal 100 access the gateway 200. Further, the authentication server 300 periodically checks the authenticated status of the terminal 100 and notifies the terminal 100 of the checked authenticated status. If the terminal 100 is in a multinet aggregation service impossible status, the authentication server 300 transmits the authenticated status and notification information to the terminal. Here, the authentication server 300 may be called a multinet aggregation-policy engine (MA-PE).

An aggregation technology of the WiFI network with the LTE network may be classified as follows depending on the aggregated point.

An L2 / link hierarchical aggregation generates a dedicated channel to a WiFi AP at a boundary point (i.e., eNB) between an LTE core network and an access network.

An L3 / network hierarchical aggregation generates a virtual IP tunnel to integrate IP addresses independently used at the LTE network and the WiFi network.

An L4 / transmission hierarchical aggregation generates a session through a single access network and then when an additional access network may be used, takes the additional access network part in data transmission independent of an IP address system. In this case, communication parties of an application level use at least one access network to support a structure in which a single session based data communication may be performed.

An L7 / application hierarchical aggregation allows a dedicated application / network agent itself to recombine the data received through the LTE network and the WiFi network or split and transmit application protocol data.

As described above, various aggregation transmissions may be made depending to the aggregation transmission layer. Hereinafter, the aggregation technology based on an L4 based multi-path TCP (MPTCP) will be described by way of example.

Referring to FIG. 3, the gateway 200 relays the MPTCP data and the TCP data. When the terminal 100 communicates with the typical TCP server, the gateway 200 may be a proxy server (transparent CP supported) of data through the MPTCP

Here, it is assumed that the servers 400 and 500 do not support the multiple communication interfaces.

When the terminal 100 may use the multinet aggregation service (for example, when the multinet aggregation service is activated), the terminal 100 and the gateway 200 transmit and receive data through a primary subflow and a secondary subflow generated from the primary path (3G / LTE network) and a sub-path (WiFi network), respectively.

When the terminal 100 cannot use the multinet aggregation service (for example, when the multinet aggregation service is deactivated or the service provided from the server 500 is set not to use the multinet aggregation transmission), the terminal 100 communicates with the server 500 through a default route without passing through the gateway 200. The default route is a basic data transmitting / receiving path that does not access the gateway 200. In the case of the WiFi access status, the default route may be the WiFi network and in the case of the WiFi non-access status, the default route may be the 3G / LTE.

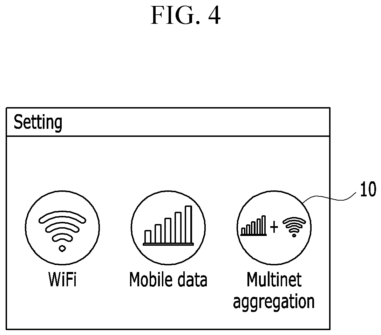

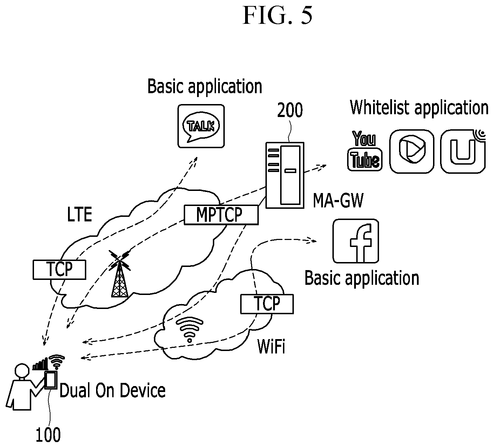

FIG. 4 is a diagram exemplarily illustrating a multinet aggregation service setting screen in a terminal according to the exemplary embodiment of the present disclosure and FIG. 5 is a diagram exemplarily illustrating a traffic flow according to an exemplary embodiment of the present disclosure.

Referring first to FIG. 4, the terminal 100 has the management application embedded therein. The management application may help a user access the terminal 100 to set a communication environment and set communication paths for each application. The management application is executed in the terminal 100 and displays a screen, which may set a communication environment by the access of the user to the terminal 100, on a display. The management application displays a screen that may perform WiFi setup, mobile data setting, multinet aggregation setting (for example, GiGA LTE setting). The management application displays a region 10 that may select the setting of the multinet aggregation (3G / LTE network + WiFi network) on the screen of the terminal 100.

When the region 10 is selected, a multinet aggregation service is set (multinet on) in the terminal 100 and the authentication server interworking unit implementing the interworking function with the authentication server 300 and the gateway interworking unit implementing the interworking function with the gateway 200 are operated to provide the multinet aggregation service. Here, multinet on means activation of the multinet aggregation service and multinet off means deactivation of the multinet aggregation service.

When the multinet aggregation service is set, the management application may display a screen that may set applications that may perform data transmission through the multinet aggregation. Applications that may use the multinet aggregation service may be called a whitelist.

The terminal 100 refers to an appropriate routing table depending on the setting / release (on / off) of the multinet aggregation service, sets an MPTCP parameter, and drives the network agent. In this case, the terminal 100 may set the primary subflow of the MPTCP as the 3G / LTE network and set the secondary subflow as the WiFi network. The connection of the primary subflow to the 3G / LTE network may maintain the network connection more stably than the connection of the primary subflow to the WiFi network. The reason is that even when the connection is broken, the 3G / LTE network may supplement resources immediately but the WiFi network secures the network connection only in the corresponding AP resource.

Referring to FIG. 5, the terminal 100 may select transmission networks of each application based on the setting for each application. For example, the terminal 100 may perform the TCP communication with a server of some applications (for example, messenger applications) through the LTE network, TCP communication with a server of some applications (for example, social media applications) through the WiFi network, and the MPTCP communication with a server of some applications (for example, moving image service applications) through the gateway (MA-GW) 200. That is, the terminal 100 may transmit and receive data through the LTE network and the WiFi network when using the application belonging to the whitelist and transmit and receive data through the default route when using messenger application.

As such, the terminal 100 manages the MPTCP flow passing through the gateway 200 when the multinet aggregation service is set. Further, the terminal 100 may be switched from the multinet aggregation transmission to the default route when an abnormal situation occurs or depending on session management of the applications.

The terminal 100 and the gateway 200 interwork with each other based on the SOCKS protocol so that the terminal 100 communicates with the server 400 via the gateway 200 that is the proxy server. Hereinafter, an interworking method of a terminal with a gateway for a multinet aggregation service will be described.

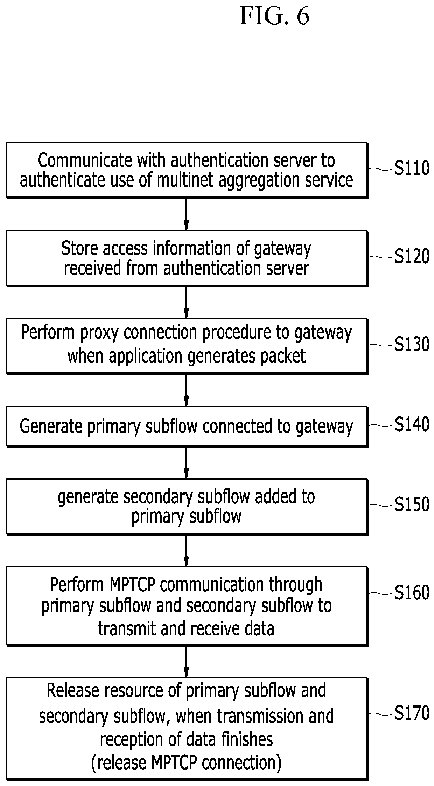

FIG. 6 is a flow chart of a method for a multinet aggregation service of a terminal according to an exemplary embodiment of the present disclosure.

Referring to FIG. 6, if the multinet aggregation service is set (on), the terminal 100 communicates with the authentication server 300 to authenticate the use of the multinet aggregation service (S110). Further, the terminal 100 periodically inquires its own multinet aggregation service status to check its own authentication state.

The authenticated terminal 100 stores access information of the gateway 200 that is received from the authentication server 300 (S120). The information of the gateway may include an address type, an address, a port, etc.

When an application generates a packet transmitted to the server, 400, the terminal 100 performs a proxy connection procedure to the gateway 200 (S130). The terminal 100 and the gateway 200 are connected to each other based on the SOCKS protocol, which may be called the SOCKS connection procedure. The server 400 may be called a content server associated with the application.

The terminal 100 generates a primary subflow connected to the gateway 200 (S140). The primary subflow is generated in the mobile communication network (3G / LTE network) that is the primary path.

When the terminal 100 is connected to a local area communication network (for example, WiFi network), the terminal 100 generates a secondary subflow added to the primary subflow (S150). The terminal 100 generates an MPTCP main subflow in the 3G / LTE network and then generates the secondary subflow in the WiFi network when being connected to the WiFi network.

The terminal 100 communicates with the MPTCP through the primary subflow and the secondary subflow to transmit and receive data (S160).

If the terminal 100 finishes the transmission and reception of data, the terminal 100 releases resources of the primary subflow and the secondary subflow (MPTCP connection release) (S170).

Here, the terminal 100 and the gateway 200 exchanges TCP SYN, SYN / ACK, and ACK with the each other at TCP connection between the primary subflow and the secondary subflow, the terminal 100 joins the TCP SYN, SYN / ACK, and ACK to the primary subflow upon the TCP connection of the secondary subflow.

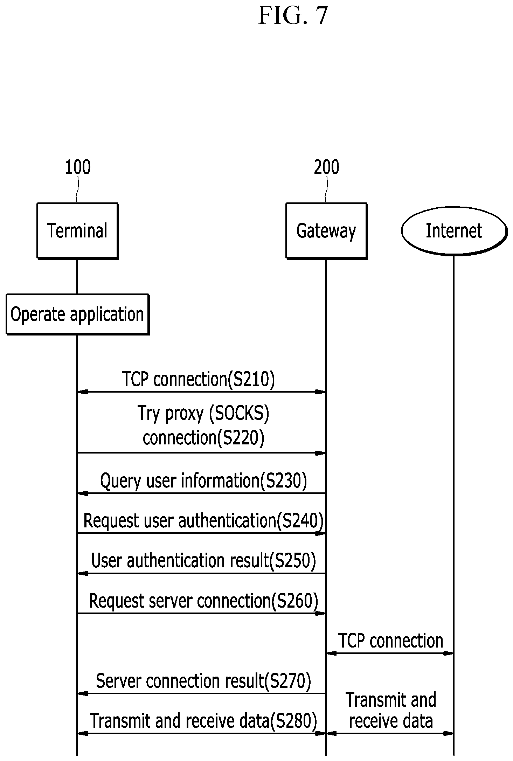

FIG. 7 is a flow chart of a gateway connection method of a terminal according to an exemplary embodiment of the present disclosure.

Referring to FIG. 7, the terminal 100 is authenticated to use the multinet aggregation service from the authentication server 300 and then acquires the access information of the gateway 200 from the authentication server 300. Further, if an application operated generates a packet (TCP SYN), the terminal 100 accesses the gateway 200 by the SOCKS connection procedure. In this case, the network agent (particularly, gateway interworking unit implementing an interworking function with the gateway 200) implemented as an internal logic of the terminal 100 performs the connection procedure with the gateway 200 while communicating with the application.

When the application is driven, the terminal 100 is TCP-connected to the gateway 200 (S210). The TCP is connected after the exchange of the TCP SYN, the SYN / ACK, and the ACK.

When the TCP connection is completed, the terminal 100 tries the proxy connection to the gateway 200 (S220). For the proxy connection, the SOCKS protocol may be used. The terminal 100 may transmit the SOCKS protocol information to the gateway 200 for the proxy connection. The SOCKS protocol information may include SOCKS version, method selection, etc.

The gateway 200 inquires the terminal 100 user information (method = username / password) (S230). The user information may be a username and a password.

The terminal 100 transmits the user authentication request (SOCKS authentication request) including the user information to the gateway 200 (S240).

The gateway 200 transmits the user authentication result (SOCKS authentication response) to the terminal 100 (S250). The user authentication result may include an authentication success (result = authentication succeeded). The gateway 200 may communicate with the authentication server 300 to confirm whether the terminal 100 corresponding to the user information is authenticated.

When the user authentication result succeeds, the terminal 100 transmits a server connection request (SOCKS connection request) including the server information to the gateway 200 (S260). The server information may include an address (IP), a domain, a server port, etc. If the user authentication result does not succeed, the terminal 100 determines a rejection reason (or failure reason) depending on the user authentication result and performs an operation designated in the user authentication result (see Table 2).

The terminal 100 manages SOCKS connection exceptions and when corresponding to the SOCKS exception, the terminal 100 may be connected to the server through a default route, instead of the SOCKS connection to the gateway 200. If the server address is a specific address (for example, private IP address, non-authentication address, etc.) or the application or the service designated to use the default route corresponds to the SOCKS connection exception, the network agent of the terminal 100 does not perform the SOCKS connection request to the gateway 200 but may access the corresponding server through the default route. For example, the default route may be set so that interfaces such as VoLTE of LTE are not performed by the MPTCP communication (MP_JOIN, MP_CAPABLE).

The gateway 200 transmits the server connection result (SOCKS connection reply) to the terminal 100 (S270). The gateway 200 communicates (with the server based on the server information included in the connection request to confirm the connection status. The server connection result may include a connection success (result = connection succeeded).

If the server connection result succeeds, the terminal 100 transmits and receives data to and from the server 400 through the gateway 200 (S280). If the server connection result succeeds, the terminal 100 generates the secondary subflow and performs the MPTCP communication with the gateway 200 to transmit and receive data. If the server connection result does not succeed, the terminal 100 accesses the server through a default route, without passing through the gateway 200

The username and the password that are the user information may be defined as the following Table 1. The username may include international mobile subscriber identity (IMSI) and mobile station ISDN (MSISDN) which are an identifier, a terminal 3G / LTE IP, a service destination IP (content provider IP), a service package name, and a terminal model name, but may be variously changed. In this case, the MSISDN may use USIM information of the terminal 100.

**(Table 1)**

| Parameters | Size (Bytes) | Type | Contents |
|---|---|---|---|
| Username (ID) | Variable (Up to 255) | Char | IMSI;MSISDN;terminal 3G/LTE IP;Service Destination IP;Service package name; terminal model name |
| Password | Variable (Up to 255) | Char | Random generation |

The gateway 200 transmits the user authentication result (SOCKS authentication response) to the terminal 100 and if the user authentication result is not a success 0x00, the terminal operation depending on the user authentication result may be defined as the following Table 2.

**(Table 2)**

| Authentication Response Result | Terminal operation |
|---|---|
| Version non-support, username parsing error (ex, 0x01 - 0x03, 0x10 - 0x17) | Process as SOCKS socket error for corresponding TCP Socket, indicator of terminal: maintain GiGA LTE icon |
| application Rejection (ex, 0x21, 0x22, 0x23, 0x24 0x26, 0x27) | Connect to default route (3G/LTE or WiFi) for traffic transmission of rejected application (not connected to gateway 200), Indicator of terminal: maintain GiGA LTE icon |
| Rejection for service package name within username (ex, 0x25) | Connect to default route (3G/LTE or WiFi) for traffic transmission of application corresponding to set service package name (for example: com.kt.ollehApp) by rejection (not connected to gateway 200), Indicator of terminal: maintain GiGA LTE icon |
| Rejection for subscriber who may not use multinet aggregation service (response to non-registered subscriber) (ex, 0x30) | Release (off) setting of multinet aggregation service by SOCKS connection release with gateway 200 and multinet aggregation service authentication release with authentication server 300 |

In the above Table 2, the username parsing error is an error found upon the parsing of the username and means, for example, an information length error, a username and password decoding error, a format error of information (IMSI, MSISDN, 3G / LTE IP, CP, IP, package name) configuring the username, a terminal model name error, a syntax error of values configuring a username such as an identifier error, etc. If the user authentication is rejected due to the version non-support or the username parsing error, only the specific socket is connected to the default route and the other socket may use the GiGA LTE, such that the terminal 100 maintains the GiGA LTE icon.

In the above Table 2, the rejection of application means a rejection reason such as an MSISDN rejection, a 3G / LTE IP rejection, a CP IP rejection, a terminal model name rejection, a rejection by a combination of username (subscriber information), etc. The gateway 200 transmits the server connection result (SOCKS connection reply) to the terminal 100 and if the server connection result is not successful 0x00, the terminal operation depending on the server connection result may be defined as the following Table 3.

**(Table 3)**

| Connection Reply Result | Terminal operation |
|---|---|
| Default route 0x01 | Connect to default route (3G/LTE or WiFi) only for corresponding session before multinet aggregation service setting release (OFF) (not connected to gateway 200) Indicator of terminal: maintain GiGA LTE icon |
| SOCKS socket error 0x02 - 0xFF | Receive SOCKS Socket error, re-connect only corresponding socket to default route by iptables to secure application service continuity Indicator of terminal: maintain GiGA LTE icon |

According to another exemplary embodiment, the application driven by the terminal 100 may transmit a user datagram protocol (UDP).

In step S250, if the user authentication result succeeds, the terminal 100 transmits UDP associate to the gateway 200, when transmitting the SOCKS connection request including the server information. Further, upon the first connection, both of a destination address and a destination port of SOCKS connection request UDP associate are set to be 0.

The gateway 200 transmits the UDP proxy address and the port for UDP connection when transmitting the SOCKS connection reply to the terminal 100. Next, the terminal 100 transmits the UPD data to the UDP proxy address.

When receiving the UDP data from the application, the network agent of the terminal 100 transmits a SOCKS UDP request header message including the UDP data to the proxy server. When the UDP transmission session is generated by the SOCKS, UDP send / receive data generated by the application later are transmitted / received through the SOCKS socket opened by the SOCKS UDP associate.

The SOCKS UDP request header message may include the information of the following Table 4.

**(Table 4)**

| Division | Size(Bytes) | Contents |
|---|---|---|
| Reserved | 2 | 0x0000 |
| Fragment | 1 | Current fragment number |
| Address Type | 1 | IPv4: 0x01 |
| | | Domain Name: 0x03 |
| | | IPv6: 0x04 |
| Destination Address | Variable | Destination address to be transmitted |
| Destination Port | 2 | Destination port to be transmitted |
| Data | Variable | Data to be transmitted |

Meanwhile, the terminal 100 fixes the communication interface of the socket (application socket) at which the application stares as the 3G / LTE that is the primary route. For this purpose, the terminal 100 isolates the socket (application socket) at which the application starts from the socket (system socket) at which a network stack of the terminal 100 stares. The terminal 100 fixes the communication interface of the socket at which the application stares to a specific communication interface (for example, LTE) and is connected to an actual connection network through the set communication interface based on a routing table established over the whole of the system. That is, the terminal 100 fixes possible communication interfaces as the communication interface of the socket binding the communication interfaces to the application anytime and anywhere in an always-on status like the 3G / LTE, etc., thereby establishing the IP address all the time and supporting global mobility. By the method, the terminal 100 may process the source binding, which is recognized by the application socket drawn into the network agent, with the 3G / LTE.

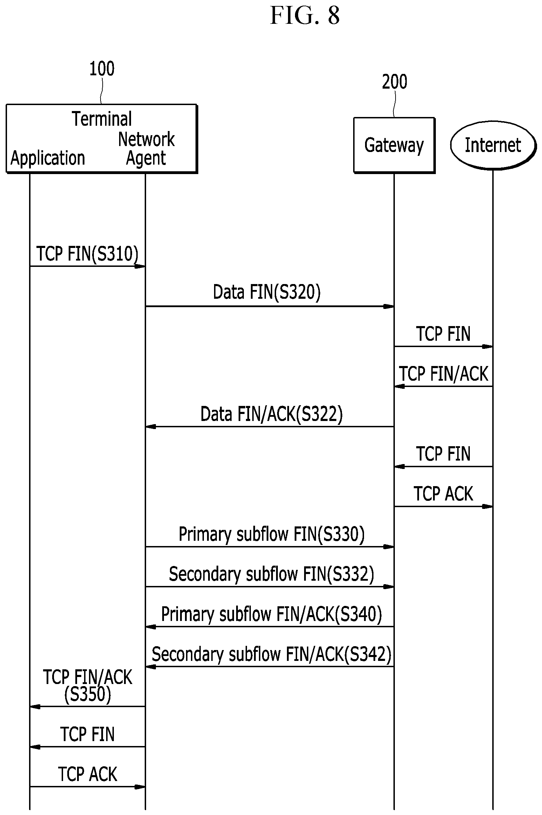

FIG. 8 is a flow chart of a method for releasing an MPTCP connection according to an exemplary embodiment of the present disclosure.

Referring to FIG. 8, when the terminal 100 finishes the transmission and reception of data of the application through the MPTCP, the terminal 100 arranges (MPTCP connection release) of the resources of the primary subflow and the secondary subflow. When the terminal 100 finishes the transmission and reception of data through the MPTCP, the terminal 100 arranges the MPTCP session within the SOCKS session as an FIN operation and transmits a TCP FIN response to the application. In this case, when the secondary subflow is lost due to a weak electric field, the terminal 100 automatically arranges the MPTCP secondary subflow without the FIN request and then normally transmits the TCP FIN acknowledgement to the application.

When the terminal 100 finishes the transmission and reception of data of application, the terminal 100 requests the TCP finish (FIN) to the network agent (S310).

The network agent of the network 100 requests the transmission and reception finish of data (Data FIN) to the gateway 200 (S320).

The gateway 200 transmits the acknowledgement to the data transmitting and receiving finish request (Data FIN / ACK) to the terminal 100 (S322). The gateway 200 communicates with the server to which the application is connected to perform the TCP FIN procedure.

The network agent of the terminal 100 requests the finish (FIN) of the primary subflow and the secondary subflow to the gateway 200 (S330 and S332).

The gateway 200 transmits the acknowledgement to the finish request (FIN / ACK) of the primary subflow and the secondary subflow to the terminal 100 (S340 and S342).

The network agent of the terminal 100 transmits the acknowledgement to the TCP fining request (TCP FIN / ACK) to the application (S350).

The TCP session is arranged between the network agent and the application in the terminal 100.

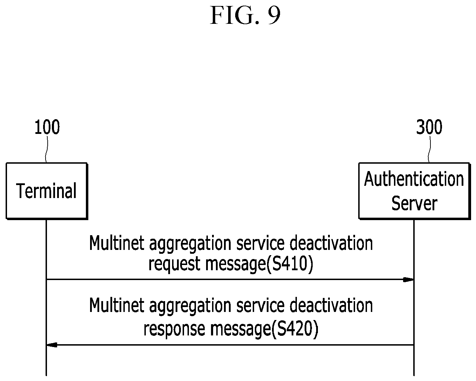

FIG. 9 is a flow chart of a method for releasing authentication of a multinet aggregation service according to an exemplary embodiment of the present disclosure.

Referring to FIG. 9, when the user authentication result succeeds, the terminal 100 transmits the connection request (SOCKS connection request) including the server information to the gateway 200. Further, the gateway 200 transmits the user authentication result (SOCKS authentication response) to the terminal 100, in which the user authentication result may be a rejection (0x30) for a subscriber who may not use the multinet aggregation service. Next, the terminal 100 stops the SOCKS connection procedure to the gateway 200 and performs the multinet aggregation service authentication release procedure from the authentication server 300 as follows.

The terminal 100 transmits a multinet aggregation (MA) service deactivation request message to the authentication server 300 (S410).

The authentication server 300 transmits the multinet aggregation (MA) service deactivation response message including the response information to the terminal 100 (S420).

The multinet aggregation (MA) service deactivation request message includes information of Table 5. The multinet aggregation service deactivation request message includes a username, a password, and reason information. The reason may include a network status and a deactivation reason at the deactivation request timing as shown in the following Table 7. The network status at the deactivation request timing may indicate the network connection status such as LTE and WiFi (LTE+WiFi), 3G and WiFi (3G+WiFi), LTE(LTE Only), and 3G (3G Only). The deactivation reason indicates whether the multinet aggregation service setting release is requested by the user or whether the authentication is completed by the authentication server 300 and then the release is requested by an error occurring upon the authentication (SOCKS authentication) between the terminal 100 and the gateway 200.

**(Table 5)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x01 |
| | Data Size | 2 | Int | Data size |
| Data | UE Version | 32 | Char | Terminal model name; binary version |
| | Username (ID) | 255 | Char | IMSI;MSISDN; terminal 3G/LTE IP;Service Destination IP;Service package name; terminal model name |
| | Password | 255 | Char | Random generation |
| | Reason | 1 | Int | 0xAB (A, B operation division) |
| | | | | A: Network status at deactivation timing |
| | | | | [Value] |
| | | | | 1 : GiGA LTE(LTE+WiFi) |
| | | | | 2 : GiGA LTE (3G+WiFi) |
| | | | | 3 : GiGA LTE(LTE Only) |
| | | | | 4 : GiGA LTE (3G Only) |
| | | | | |
| | | | | B : Deactivation reason |
| | | | | [Value] |
| | | | | 1: When user releases (off) MA setting |
| | | | | 2: When receiving 0x30 as SOCKS |
| | | | | Authentication Response |
| | | | | 0xFF : Reserved |
| | Reserved | 4 | Char | Reserved |

The multinet aggregation (MA) service deactivation response message includes information of Table 6. The multinet aggregation service deactivation response message may include the response result for the deactivation request and the response result may include information accepting the deactivation request (accepted). That is, the information accepting the deactivation request (accepted) means that the authentication is released.

**(Table 6)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x11 |
| | Data Size | 2 | Int | Data size |
| Data | Status | 1 | Int | 0x00 : Accepted |
| | Reserved | 4 | Char | Reserved |

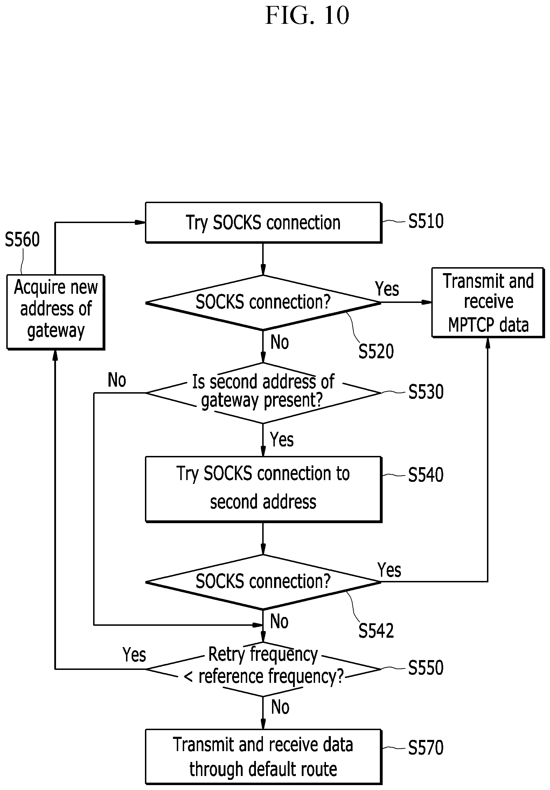

FIG. 10 is a flow chart of a processing method upon a proxy connection error of a terminal according to an exemplary embodiment of the present disclosure.

Referring to FIG. 10, in the case of the non-response of the TCP SYN transmitted to the gateway 200 and the SOCKS connection failure, the terminal 100 retries the SOCKS connection and when the retry result fails, the terminal 100 may connect only the corresponding session to the default route to transmit and receive data.

The terminal 100 tries the SOCKS connection to the gateway 200 (S510). The terminal 100 tries the SOCKS connection to a first address (primary IP) of the gateway 200.

The terminal 100 determines whether the SOCKS connection is made (S520). If the SOCKS connection succeeds, data are transmitted and received through the MPTCP depending on the procedure described with reference to FIGS. 6 and 7.

If the SOCKS connection fails, the terminal 100 confirms whether there is a second address (secondary IP) of the gateway 200 (S530). The second address (secondary IP) may be received from an authentication server 300 along with the first address (primary IP).

When there is the second address of the gateway 200, the terminal 100 tries the SOCKS connection to the gateway 200 of the second address (S540).

The terminal 100 determines whether the SOCKS connection is made (S542). If the SOCKS connection succeeds, data are transmitted and received through the MPTCP depending on the procedure described with reference to FIGS. 6 and 7.

If the SOCKS connection fails, the terminal 100 determines whether a retry frequency (a number of times being retried) is less than a reference frequency N (S550). The reference frequency may be two times (i.e., N=2).

If it is determined that the retry frequency is less than the reference frequency, the terminal 100 acquires a new address of the gateway from the authentication server 300 (S560). The terminal 100 tries the SOCKS connection to the new address of the gateway. The terminal 100 transmits a multinet aggregation (MA) service activation request message to the authentication server 300 to acquire the new address of the gateway.

When the retry frequency is equal to or more than the reference frequency, the terminal 100 transmits and receives data to the default route (S570). Even though data are transmitted and received to and from the default route due to the SOCKS connection failure, the terminal 100 may periodically transmit a multinet aggregation (MA) service status query message to the authentication server 300 and may maintain the connection to the gateway 200 when using the multinet aggregation service.

Meanwhile, when the second address of the gateway 200 is not present, the terminal 100 moves to step S550 of determining the retry frequency.

In detail, the terminal 100 transmits the multinet aggregation service activation request message to the authentication server 300 and receives the multinet aggregation service activation response message as a response to the multinet aggregation service activation request message. In this case, the multinet aggregation service activation response message includes at least one of the addresses of the gateway 200.

According to the exemplary embodiment of the present disclosure, when the address of the gateway 200 acquired from the authentication server 300 is one, if the SOCKS connection fails, the terminal 100 retransmits the multinet aggregation service activation request message to the authentication server 300 to re-acquire the address of the gateway 200. The re-acquired address is an address different from the previously acquired address. When at least two SOCKS connections are made, the network agent in the application transmits one multinet aggregation service activation request message to the authentication server 300 independent of the number of TCP sessions.

The terminal 100 retries the SOCKS connection based on the re-acquired address of the gateway 200. Even when the SOCKS connection based on the re-acquired address fails, the terminal 100 connects only the corresponding session to the default route to transmit and receive data. In this case, the terminal maintains the GiGA LTE indicator. Due to the SOCKS connection failure, a session which is connecting to the default route periodically transmits the multinet aggregation (MA) status query request message to the authentication server 300 to confirm whether the multinet aggregation service is in a usable status and if it is confirmed that the multinet aggregation service may be used, the terminal 100 may try the connection to the gateway 200.

According to another exemplary embodiment of the present disclosure, when the address of the gateway 200 acquired from the authentication server 300 is plural (for example, two), if the SOCKS connection tried to the first address fails, the terminal 100 retries the SOCKS connection to the second address of the gateway 200. When the SOCKS connection even to the second address fails, the terminal 100 retransmits the multinet aggregation service activation request message to the authentication server 300 to re-acquire the address of the gateway 200. If the SOCKS connection even to the re-acquired address fails, the terminal 100 connects only the corresponding session to the default route to transmit and receive data. Due to the SOCKS connection failure, a session which is connecting to the default route periodically transmits the multinet aggregation (MA) service status query message to the authentication server 300 to confirm whether the multinet aggregation service is in a usable status and if it is confirmed that the multinet aggregation service may be used, the terminal 100 may try the connection to the gateway 200.

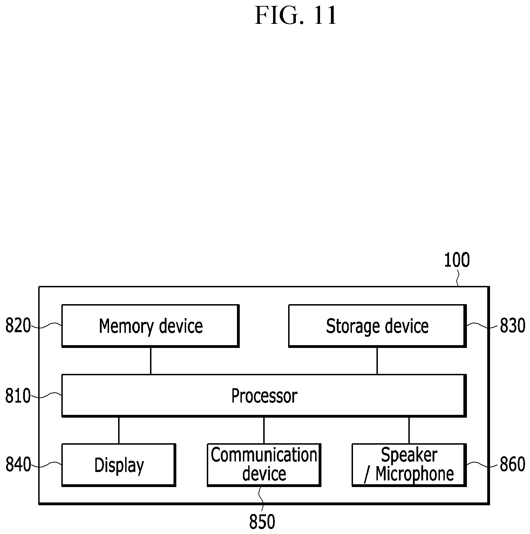

FIG. 11 is a hardware block diagram of a terminal according to an exemplary embodiment of the present disclosure.

Referring to FIG. 11, the terminal 100 is configured of hardware including a processor 810, a memory device 820, a storage device 830, a display 840, a communication device 850, a speaker / microphone 860, etc., and programs executed by being combined with the hardware are stored in a designated location. The hardware has a configuration and performance that may perform the method of the present disclosure. The programs include instructions implementing the operating method of the present disclosure described with reference to FIGS. 1 to 10 and are combined with the hardware such as the processor 810 and the memory device 820 to perform the present disclosure. The program may include instructions for the operation of the network agent that is implemented as the management application and the terminal internal logic. The network agent includes an authentication server interworking unit implementing an interworking function with the authentication server 300 and a gateway interworking unit implementing an interworking function with the gateway 200. Further, the terminal has various application programs embedded therein.

The gateway 200 and the authentication server 300 are also configured of hardware including the processor, the memory device, the storage device, the communication device etc., and a program is stored in a designated location and executed by being combined with the hardware. The hardware has a configuration and performance that may perform the method of the present disclosure. The programs include instructions implementing the operating method of the present disclosure described with reference to FIGS. 1 to 10 and are combined with the hardware such as the processor and the memory device to perform the present disclosure.

As such, according to an exemplary embodiment of the present disclosure, the gateway providing the multinet aggregation service may provide the user authentication result and the server connection result to the terminal, such that the terminal may maintain or release the multinet aggregation service setting based on the received result. Further, according to an exemplary embodiment of the present disclosure, the user may recognize the connection status on the multinet aggregation service based on the user authentication result and the server connection result provided from the gateway to easily understand whether the terminal is in the multinet aggregation service possible status.

The foregoing exemplary embodiments of the present disclosure are not implemented only by an apparatus and a method, and therefore, may be realized by programs realizing functions corresponding to the configuration of the exemplary embodiment of the present disclosure or recording media on which the programs are recorded.

While this disclosure has been described in connection with what is presently considered to be practical exemplary embodiments, it is to be understood that the disclosure is not limited to the disclosed embodiments, but, on the contrary, is intended to cover various modifications and equivalent arrangements included within the scope of the appended claims.

## Claims

1. An operating method of a terminal (100) for a multinet aggregation service, comprising:
receiving access information of a gateway (200) providing the multinet aggregation service from an authentication server (300);
accessing the gateway (200) corresponding to the access information through a first network to perform a connection procedure, when a packet transmitted to a server (400, 500) is generated;
generating a first subflow through the first network when the connection procedure to the gateway succeeds; and
generating a second subflow joined to the first subflow through a second network,
wherein the access information helps the terminal (100) to access the gateway (200),
wherein the performing of the connection procedure includes:
transmitting user information to the gateway (200);
receiving a user authentication result determined based on the user information from the gateway (200);
transmitting server information to the gateway (200) when the user authentication result succeeds; and
receiving the connection result to the server (400, 500) from the gateway (200),
wherein the gateway (200) is a network apparatus that is positioned at a contact between the first network and the second network and is proxy-connected to the terminal (100) and the server (400, 500) for data communication between the terminal (100) and the server (400, 500) through the first subflow and the second subflow when the connection procedure to the gateway succeeds, said method further comprising accessing the server (400, 500) through a default route when the connection procedure to the gateway (200) fails.

2. The operating method of claim 1, further comprising:
releasing the connection procedure to the gateway (200) when the user authentication result includes a rejection for the use of the multinet aggregation service; and
transmitting a message requesting a multinet aggregation service authentication release to the authentication server (300).

3. The operating method of claim 2, wherein the message includes a reason and the reason indicates the user authentication result.

4. The operating method of claim 1, further comprising
accessing the server (400, 500) through a default route when the user authentication result includes the rejection for a service package name,
wherein the user information includes the service package name.

5. The operating method of claim 1, further comprising:
accessing the server (400, 500) through the default route and then transmitting a multinet aggregation (MA) service status query message to the authentication server (300) to query a multinet aggregation service status; and
performing a connection procedure to the gateway (200) when the multinet aggregation service is used, as a result of receiving a response of the multinet aggregation service status query message.

6. The operating method of claim 1, further comprising
re-performing the connection procedure to the gateway (200) when the connection procedure to the gateway (200) accessed to a first address fails,
wherein the re-performing of the connection procedure includes:
re-acquiring an address of the gateway (200) from the authentication server (300);
trying the connection procedure to the gateway (200) to the re-acquired address; and
accessing the corresponding session to the server (400, 500) through the default route when the connection procedure tried to the re-acquired address fails.

7. The operating method of claim 6, wherein
the re-acquiring of the address of the gateway (200) includes:
trying the connection procedure to the gateway (200) by using a second address different from the first address; and
re-acquiring the address of the gateway (200) from the authentication server (300) when the connection procedure tried to the second address fails,
wherein the access information includes the first address and the second address.

8. The operating method of claim 1, wherein
the performing of the connection procedure further includes:
managing a connection exception to the gateway (200);
performing the connection procedure to the gateway (200) when the information associated with the server does not correspond to the connection exception; and
accessing the server (400, 500) through a default route when the information associated with the server corresponds to the connection exception,
wherein the connection exception includes at least one address corresponding to a private IP address or a non-authenticated address as a destination server.

9. The operating method of claim 1, wherein the first network is a mobile communication network and the second network is a local area communication network.

10. An operating method for performing, by a gateway (200) positioned at a contact of a multinet, a multinet aggregation service for a terminal (100), comprising:
receiving user information from the terminal (100);
transmitting a user authentication result for the user information to the terminal (100);
receiving server information from the terminal (100) when the user authentication result succeeds;
transmitting a connection result to the server (400, 500) corresponding to the server information to the terminal (100);
generating a first subflow connected to the terminal (100) through the first network when the connection result to the server (400, 500) succeeds; and
generating a second subflow joined to the first subflow through a second network,
wherein the transmitting of the user authentication result includes:
determining whether the terminal (100) is a subscriber who uses the multinet aggregation service by interworking with the authentication server (300), based on the user information; and
transmitting the user authentication result including a rejection for the use of the multinet aggregation service when the terminal (100) is a subscriber who does not use the multinet aggregation service, and
wherein the authentication server (300) is a network apparatus that authenticates the terminal (100) and provides the access information of the gateway (200) to the authenticated terminal (100).

11. The operating method of claim 10, wherein
the transmitting of the user authentication result includes
transmitting a user authentication result indicating a failure reason when the connection result to the server (400, 500) fails, and
wherein the failure reason includes at least one of information indicating an error found when parsing a value included in the user information, information indicating a rejection for the value included in the user information, and information indicating a rejection for a service package name included in the user information.

12. The operating method of claim 10, wherein
the transmitting of the connection result to the server (400, 500) includes
transmitting a result of requesting the terminal (100) to access the server (400, 500) through a default route when the connection result to the server (400, 500) fails.

13. A terminal (100) for providing a multinet aggregation service, comprising:
at least one communication module;
at least one display;
at least one memory storing a program; and
at least processor interworking with the communication module, the display, and the memory to execute the program,
wherein the program includes instructions
receiving access information of the gateway (200) providing the multinet aggregation service from an authentication server (300),
performing a connection procedure to the gateway (200) corresponding to the access information through a first network when an application is driven to generate a packet transmitted to the server (400, 500),
generating a first subflow through the first network when the connection procedure to the gateway succeeds,
generating a second subflow joined to the first subflow through a second network, and transmitting and receiving data associated with the application through the gateway (200) when the connection to the gateway (200) succeeds,
wherein the gateway (200) is a network apparatus that is positioned at a contact between the first network and the second network and is proxy-connected to the terminal (100) and the server (400, 500) for data communication between the terminal (100) and the server (400, 500),
wherein the program further includes instructions
accessing the server (400, 500) through a default route when the connection result to the server (400, 500) fails, and
wherein the performing of the connection procedure includes:
transmitting the user information to the gateway (200) when the application is driven to generate a packet transmitted to a content server;
receiving a user authentication result determined based on the user information from the gateway (200);
transmitting the server information to the gateway (200) when the user authentication result succeeds; and
receiving the connection result to the server (400, 500) from the gateway (200).

14. The terminal (100) of claim 13, wherein the program further includes instructions
releasing the connection procedure to the gateway (200) and transmitting a message requesting a multinet aggregation service authentication release to the authentication server (300), when the user authentication result includes a rejection for the use of the multinet aggregation service.

15. The terminal (100) of claim 13, wherein the program further includes instructions accessing the server (400, 500) through the default route, when the user authentication result includes at least one of an error found upon parsing of a value included in the user information, a rejection for the value included in the user information, and a rejection for a service package name included in the user information.

## Patentansprüche

1. Verfahren zum Betreiben eines Endgeräts (100) für einen Mehrfachnetz-Aggregationsdienst, umfassend:
Empfangen von Zugriffsinformationen eines Gateways (200), das den Mehrfachnetz-Aggregationsdienst bereitstellt, von einem Authentisierungsserver (300);
Zugreifen auf das Gateway (200) entsprechend den Zugriffsinformationen durch ein erstes Netzwerk, um eine Verbindungsprozedur durchzuführen, wenn ein Paket erzeugt wird, das an einen Server (400, 500) gesendet wird;
Erzeugen eines ersten Teilflusses durch das erste Netzwerk, wenn die Verbindungsprozedur mit dem Gateway erfolgreich ist; und
Erzeugen eines zweiten Teilflusses, der mit dem ersten Teilfluss verbunden wird, durch ein zweites Netzwerk,
wobei die Zugriffsinformationen dem Endgerät (100) helfen, um auf das Gateway (200) zuzugreifen,
wobei das Durchführen der Verbindungsprozedur umfasst:
Senden von Benutzerinformationen an das Gateway (200) ;
Empfangen eines Benutzerauthentisierungsergebnisses, das basierend auf den Benutzerinformationen bestimmt wird, vom Gateway (200) ;
Senden von Serverinformationen an das Gateway (200), wenn das Benutzerauthentisierungsergebnis erfolgreich ist; und
Empfangen des Verbindungsergebnisses mit dem Server (400, 500) vom Gateway (200),
wobei das Gateway (200) eine Netzwerkvorrichtung ist, die an einem Kontakt zwischen dem ersten Netzwerk und dem zweiten Netzwerk positioniert und als Proxy zur Datenkommunikation zwischen dem Endgerät (100) und dem Server (400, 500) durch den ersten Teilfluss und den zweiten Teilfluss, wenn die Verbindungsprozedur mit dem Gateway erfolgreich ist, mit dem Endgerät (100) und dem Server (400, 500) verbunden ist, wobei das Verfahren ferner ein Zugreifen auf den Server (400, 500) durch eine Standardroute umfasst, wenn die Verbindungsprozedur mit dem Gateway (200) fehlschlägt.

2. Betriebsverfahren nach Anspruch 1, ferner umfassend:
Freigeben der Verbindungsprozedur mit dem Gateway (200), wenn das Benutzerauthentisierungsergebnis zu einer Zurückweisung für die Verwendung des Mehrfachnetz-Aggregationsdienstes führt; und
Senden einer Nachricht, die eine Freigabe der Authentisierung des Mehrfachnetz-Aggregationsdienstes anfordert, an den Authentisierungsserver (300).

3. Betriebsverfahren nach Anspruch 2, wobei die Nachricht einen Grund umfasst, und der Grund das Benutzerauthentisierungsergebnis angibt.

4. Betriebsverfahren nach Anspruch 1, ferner umfassend:
Zugreifen auf den Server (400, 500) durch eine Standardroute, wenn das Benutzerauthentisierungsergebnis die Zurückweisung für einen Dienstpaketnamen umfasst,
wobei die Benutzerinformationen den Dienstpaketnamen umfassen.

5. Betriebsverfahren nach Anspruch 1, ferner umfassend:
Zugreifen auf den Server (400, 500) durch die Standardroute und anschließendes Senden einer Nachricht zur Abfrage eines Mehrfachnetz-Aggregations (MA)-Dienststatus an den Authentisierungsserver (300), um einen Status des Mehrfachnetz-Aggregationsdienstes abzufragen; und
Durchführen einer Verbindungsprozedur mit dem Gateway (200), wenn der Mehrfachnetz-Aggregationsdienst verwendet wird, als Ergebnis des Empfangens einer Antwort der Nachricht zur Abfrage des Mehrfachnetz-Aggregationsdienststatus.

6. Betriebsverfahren nach Anspruch 1, ferner umfassend:
erneutes Durchführen der Verbindungsprozedur mit dem Gateway (200), wenn die Verbindungsprozedur mit dem Gateway, die auf eine erste Adresse zugreift, fehlschlägt,
wobei das erneute Durchführen der Verbindungsprozedur umfasst:
erneutes Abrufen einer Adresse des Gateways (200) vom Authentisierungsserver (300);
Versuchen der Verbindungsprozedur mit dem Gateway (200) mit der erneut abgerufenen Adresse; und
Zugreifen auf die entsprechende Sitzung mit dem Server (400, 500) durch die Standardroute, wenn die mit der erneut abgerufenen Adresse versuchte Verbindungsprozedur fehlschlägt.

7. Betriebsverfahren nach Anspruch 6, wobei
das erneute Abrufen der Adresse des Gateways (200) umfasst:
Versuchen der Verbindungsprozedur mit dem Gateway (200) durch Verwenden einer zweiten Adresse, die von der ersten Adresse verschieden ist; und
erneutes Abrufen der Adresse des Gateways (200) vom Authentisierungsserver (300), wenn die mit der zweiten Adresse versuchte Verbindungsprozedur fehlschlägt,
wobei die Zugriffsinformationen die erste Adresse und die zweite Adresse umfassen.

8. Betriebsverfahren nach Anspruch 1, wobei
das Durchführen der Verbindungsprozedur ferner umfasst:
Verwalten einer Verbindungsausnahme mit dem Gateway (200) ;
Durchführen der Verbindungsprozedur mit dem Gateway (200), wenn die mit dem Server assoziierten Informationen nicht der Verbindungsausnahme entsprechen; und
Zugreifen auf den Server (400, 500) durch eine Standardroute, wenn die mit dem Server assoziierten Informationen der Verbindungsausnahme entsprechen,
wobei die Verbindungsausnahme mindestens eine Adresse, die einer privaten IP-Adresse oder einer nicht authentisierten Adresse entspricht, als einen Zielserver umfasst.

9. Betriebsverfahren nach Anspruch 1, wobei das erste Netzwerk ein Mobilkommunikationsnetzwerk ist, und das zweite Netzwerk ein lokales Kommunikationsnetzwerk ist.

10. Betriebsverfahren zum Durchführen eines Mehrfachnetz-Aggregationsdiensts für ein Endgerät (100) durch ein Gateway (200), das an einem Kontakt eines Mehrfachnetzes positioniert ist, umfassend:
Empfangen von Benutzerinformationen vom Endgerät (100) ;
Senden eines Benutzerauthentisierungsergebnisses für die Benutzerinformationen an das Endgerät (100);
Empfangen von Serverinformationen vom Endgerät (100), wenn das Benutzerauthentisierungsergebnis erfolgreich ist;
Senden eines Verbindungsergebnisses mit dem Server (400, 500) entsprechend den Serverinformationen an das Endgerät (100);
Erzeugen eines ersten Teilflusses, der mit dem Endgerät (100) verbunden wird, durch das erste Netzwerk, wenn das Verbindungsergebnis mit dem Server (400, 500) erfolgreich ist;
Erzeugen eines zweiten Teilflusses, der mit dem ersten Teilfluss verbunden wird, durch ein zweites Netzwerk,
wobei das Senden des Benutzerauthentisierungsergebnisses umfasst:
Bestimmen, ob das Endgerät (100) ein Abonnent ist, der den Mehrfachnetz-Aggregationsdienst verwendet, durch Zusammenarbeiten mit dem Authentisierungsserver (300) basierend auf den Benutzerinformationen; und
Senden des Benutzerauthentisierungsergebnisses, das eine Zurückweisung für die Verwendung des Mehrfachnetz-Aggregationsdienstes umfasst, wenn das Endgerät (100) ein Abonnent ist, der den Mehrfachnetz-Aggregationsdienst nicht verwendet, und
wobei der Authentisierungsserver (300) eine Netzwerkvorrichtung ist, die das Endgerät (100) authentisiert und Zugriffsinformationen des Gateways (200) für das authentisierte Endgerät (100) bereitstellt.

11. Betriebsverfahren nach Anspruch 10, wobei
das Senden des Benutzerauthentisierungsergebnisses umfasst:
Senden eines Benutzerauthentisierungsergebnisses, das eine Fehlerursache angibt, wenn das Verbindungsergebnis mit dem Server (400, 500) fehlschlägt, und
wobei die Fehlerursache mindestens welche von Informationen, die einen Fehler angeben, der beim Parsen eines in den Benutzerinformationen enthaltenen Wertes gefunden wird, Informationen, die eine Zurückweisung für den in den Benutzerinformationen enthaltenen Wert angeben, und Informationen umfasst, die eine Zurückweisung für einen in den Benutzerinformationen enthaltenen Dienstpaketnamen angeben.

12. Betriebsverfahren nach Anspruch 10, wobei
das Senden des Verbindungsergebnisses mit dem Server (400, 500) umfasst:
Senden eines Ergebnisses des Aufforderns des Endgeräts (100) zum Zugreifen auf den Server (400, 500) durch eine Standardroute, wenn das Verbindungsergebnis mit dem Server (400, 500) fehlschlägt.

13. Endgerät (100) zum Bereitstellen eines Mehrfachnetz-Aggregationsdienstes, umfassend:
mindestens ein Kommunikationsmodul;
mindestens eine Anzeige;
mindestens einen Speicher, der ein Programm speichert; und
mindestens einen Prozessor, der mit dem Kommunikationsmodul, der Anzeige und dem Speicher zusammenarbeitet, um das Programm auszuführen,
wobei das Programm Anweisungen umfasst zum:
Empfangen von Zugangsinformationen die Gateways (200), das den Mehrfachnetz-Aggregationsdienst bereitstellt, von einem Authentisierungsserver (300);
Durchführen einer Verbindungsprozedur mit dem Gateway (200) entsprechend den Zugriffsinformationen durch ein erstes Netzwerk, wenn eine Anwendung zum Erzeugen eines Pakets angesteuert wird, das an den Server (400, 500) gesendet wird,
Erzeugen eines ersten Teilflusses durch das erste Netzwerk, wenn die Verbindungsprozedur mit dem Gateway erfolgreich ist;
Erzeugen eines zweiten Teilflusses, der mit dem ersten Teilfluss verbunden wird, durch ein zweites Netzwerk und
Senden und Empfangen von Daten, die mit der Anwendung assoziiert sind, durch das Gateway (200), wenn die Verbindung mit dem Gateway (200) erfolgreich ist,
wobei das Gateway (200) eine Netzwerkvorrichtung ist, die an einem Kontakt zwischen dem ersten Netzwerk und dem zweiten Netzwerk positioniert und als Proxy zur Datenkommunikation zwischen dem Endgerät (100) und dem Server (400, 500) mit dem Endgerät (100) und dem Server (400, 500) verbunden ist,
wobei das Programm ferner Anweisungen umfasst zum:
Zugreifen auf den Server (400, 500) durch eine Standardroute, wenn das Verbindungsergebnis mit dem Server (400, 500) fehlschlägt. und
wobei das Durchführen der Verbindungsprozedur umfasst:
Senden der Benutzerinformationen an das Gateway (200), wenn die Anwendung zum Erzeugen eines Pakets angesteuert wird, das an einen Inhaltsserver gesendet wird;
Empfangen eines Benutzerauthentisierungsergebnisses, das basierend auf den Benutzerinformationen bestimmt wird, vom Gateway (200) ;
Senden der Serverinformationen an das Gateway (200), wenn das Benutzerauthentisierungsergebnis erfolgreich ist; und
Empfangen des Verbindungsergebnisses mit dem Server (400, 500) vom Gateway (200),

14. Endgerät (100) nach Anspruch 13, wobei das Programm ferner Anweisungen umfasst zum:
Freigeben der Verbindungsprozedur mit dem Gateway (200) und Senden einer Nachricht, die eine Freigabe der Authentisierung des Mehrfachnetz-Aggregationsdienstes anfordert, an den Authentisierungsserver (300), wenn das Benutzerauthentisierungsergebnis eine Zurückweisung für die Verwendung des Mehrfachnetz-Aggregationsdienstes umfasst.

15. Endgerät (100) nach Anspruch 13, wobei das Programm ferner Anweisungen umfasst zum:
Zugreifen auf den Server (400, 500) durch die Standardroute, wenn das Benutzerauthentisierungsergebnis mindestens eines von einem Fehler, der beim Parsen eines in den Benutzerinformationen enthaltenen Wertes gefunden wird, einer Zurückweisung für den in den Benutzerinformationen enthaltenen Wert und einer Zurückweisung für einen in den Benutzerinformationen enthaltenen Dienstpaketnamen umfasst.

## Revendications

1. Procédé de fonctionnement d'un terminal (100) pour un service d'agrégation multi-net, comprenant de :
recevoir des informations d'accès d'une passerelle (200) fournissant le service d'agrégation multi-net à partir d'un serveur d'authentification (300) ;
accéder à la passerelle (200) correspondant aux informations d'accès à travers un premier réseau pour réaliser une procédure de connexion, lorsqu'un paquet transmis à un serveur (400, 500) est généré ;
générer un premier sous-flux à travers le premier réseau lorsque la procédure de connexion à la passerelle réussit ; et
générer un deuxième sous-flux joint au premier sous-flux à travers un deuxième réseau,
dans lequel les informations d'accès aident le terminal (100) à accéder à la passerelle (200),
dans lequel la réalisation de la procédure de connexion comporte :
la transmission d'informations d'utilisateur à la passerelle (200) ;
la réception d'un résultat d'authentification d'utilisateur déterminé sur la base des informations d'utilisateur à partir de la passerelle (200) ;
la transmission d'informations de serveur à la passerelle (200) lorsque le résultat d'authentification d'utilisateur réussit ; et
la réception du résultat de connexion au serveur (400, 500) à partir de la passerelle (200),
dans lequel la passerelle (200) est un appareil de réseau qui est positionné sur un point de contact entre le premier réseau et le deuxième réseau et qui est connecté par un serveur mandataire au terminal (100) et au serveur (400, 500) pour la communication de données entre le terminal (100) et le serveur (400, 500) à travers le premier sous-flux et le deuxième sous-flux lorsque la procédure de connexion à la passerelle réussit, ledit procédé comprenant en outre d'accéder au serveur (400, 500) à travers une route par défaut lorsque la procédure de connexion à la passerelle (200) échoue.

2. Procédé de fonctionnement selon la revendication 1, comprenant en outre de :
libérer la procédure de connexion à la passerelle (200) lorsque le résultat d'authentification d'utilisateur comporte un rejet de l'utilisation du service d'agrégation multi-net ; et
transmettre un message demandant une libération d'authentification de service d'agrégation multi-net au serveur d'authentification (300).

3. Procédé de fonctionnement selon la revendication 2, dans lequel le message comporte une raison et la raison indique le résultat d'authentification d'utilisateur.

4. Procédé de fonctionnement selon la revendication 1, comprenant en outre de
accéder au serveur (400, 500) à travers une route par défaut lorsque le résultat d'authentification d'utilisateur comporte le rejet d'un nom de bloc de service,
dans lequel les informations d'utilisateur comportent le nom de bloc de service.

5. Procédé de fonctionnement selon la revendication 1, comprenant en outre de :
accéder au serveur (400, 500) à travers la route par défaut et transmettre ensuite un message de requête de statut de service d'agrégation multi-net (MA) au serveur d'authentification (300) pour demander un statut de service d'agrégation multi-net ; et
réaliser une procédure de connexion à la passerelle (200) lorsque le service d'agrégation multi-net est utilisé, comme un résultat de la réception d'une réponse du message de requête de statut de service d'agrégation multi-net.

6. Procédé de fonctionnement selon la revendication 1, comprenant en outre de
réaliser de nouveau la procédure de connexion à la passerelle (200) lorsque la procédure de connexion à la passerelle (200) accessible par une première adresse échoue,
dans lequel la réalisation de nouveau de la procédure de connexion comporte :
acquérir de nouveau une adresse de la passerelle (200) à partir du serveur d'authentification (300) ;
essayer la procédure de connexion à la passerelle (200) à l'adresse acquise de nouveau ; et
faire accéder la session correspondante au serveur (400, 500) à travers la route par défaut lorsque la procédure de connexion ayant essayé l'adresse acquise de nouveau échoue.

7. Procédé de fonctionnement selon la revendication 6, dans lequel
l'acquisition de nouveau de l'adresse de la passerelle (200) comporte :
une tentative de connexion de la procédure à la passerelle (200) en utilisant une deuxième adresse différente de la première adresse ; et
acquérir de nouveau l'adresse de la passerelle (200) à partir du serveur d'authentification (300) lorsque la procédure de connexion ayant essayé la deuxième adresse échoue,
dans lequel les informations d'accès comportent la première adresse et la deuxième adresse.

8. Procédé de fonctionnement selon la revendication 1, dans lequel
la réalisation de la procédure de connexion comporte en outre de :
gérer une exception de connexion à la passerelle (200) ;
réaliser la procédure de connexion à la passerelle (200) lorsque les informations associées au serveur ne correspondent pas à l'exception de connexion ; et
accéder au serveur (400, 500) à travers une route par défaut lorsque les informations associées au serveur correspondent à l'exception de connexion,
dans lequel l'exception de connexion comporte au moins une adresse correspondant à une adresse IP privée ou à une adresse non authentifiée comme un serveur de destination.

9. Procédé de fonctionnement selon la revendication 1, dans lequel le premier réseau est un réseau de communication mobile et le deuxième réseau est un réseau de communication local.

10. Procédé de fonctionnement pour réaliser, par une passerelle (200) positionnée sur un point de contact d'un multi-net, un service d'agrégation multi-net pour un terminal (100), comprenant de :
recevoir des informations d'utilisateur à partir du terminal (100) ;
transmettre un résultat d'authentification d'utilisateur pour les informations d'utilisateur au terminal (100) ;
recevoir des informations de serveur à partir du terminal (100) lorsque le résultat d'authentification d'utilisateur réussit ;
transmettre un résultat de connexion au serveur (400, 500) correspondant aux informations de serveur au terminal (100) ;
générer un premier sous-flux connecté au terminal (100) à travers le premier réseau lorsque le résultat de connexion au serveur (400, 500) réussit ; et
générer un deuxième sous-flux joint au premier sous-flux à travers un deuxième réseau,
dans lequel la transmission du résultat d'authentification d'utilisateur comporte de :
déterminer si le terminal (100) est un abonné qui utilise le service d'agrégation multi-net en interfonctionnant avec le serveur d'authentification (300), sur la base des informations d'utilisateur ; et
transmettre le résultat d'authentification d'utilisateur comportant un rejet de l'utilisation du service d'agrégation multi-net lorsque le terminal (100) est un abonné qui n'utilise pas le service d'agrégation multi-net, et
dans lequel le serveur d'authentification (300) est un appareil de réseau qui authentifie le terminal (100) et qui fournit les informations d'accès de la passerelle (200) au terminal authentifié (100).

11. Procédé de fonctionnement selon la revendication 10, dans lequel
la transmission du résultat d'authentification d'utilisateur comporte
la transmission d'un résultat d'authentification d'utilisateur indiquant une raison d'échec lorsque le résultat de connexion au serveur (400, 500) échoue, et
dans lequel la raison d'échec comporte au moins l'une parmi des informations indiquant une erreur trouvée lors de l'analyse syntaxique d'une valeur incluse dans les informations d'utilisateur, des informations indiquant un rejet de la valeur incluse dans les informations d'utilisateur, et des informations indiquant un rejet d'un nom de bloc de service inclus dans les informations d'utilisateur.

12. Procédé de fonctionnement selon la revendication 10, dans lequel
la transmission du résultat de connexion au serveur (400, 500) comporte
la transmission d'un résultat de la requête du terminal (100) pour accéder au serveur (400, 500) à travers une route par défaut lorsque le résultat de connexion au serveur (400, 500) échoue.

13. Terminal (100) pour fournir un service d'agrégation multi-net, comprenant :
au moins un module de communication ;
au moins un dispositif d'affichage ;
au moins une mémoire stockant un programme ; et
au moins un processeur interfonctionnant avec le module de communication, le dispositif d'affichage, et la mémoire pour exécuter le programme,
dans lequel le programme comporte des instructions recevant des informations d'accès de la passerelle (200) fournissant le service d'agrégation multi-net à partir d'un serveur d'authentification (300),
réalisant une procédure de connexion à la passerelle (200) correspondant aux informations d'accès à travers un premier réseau lorsqu'une application est commandée pour générer un paquet transmis au serveur (400, 500),
générant un premier sous-flux à travers le premier réseau lorsque la procédure de connexion à la passerelle réussit,
générant un deuxième sous-flux joint au premier sous-flux à travers un deuxième réseau, et
transmettant et recevant des données associées à l'application à travers la passerelle (200) lorsque la connexion à la passerelle (200) réussit,
dans lequel la passerelle (200) est un appareil de réseau qui est positionné sur un point de contact entre le premier réseau et le deuxième réseau et qui est connecté par un serveur mandataire au terminal (100) et au serveur (400, 500) pour la communication de données entre le terminal (100) et le serveur (400, 500),
dans lequel le programme comporte en outre des instructions
accédant au serveur (400, 500) à travers une route par défaut lorsque le résultat de connexion au serveur (400, 500) échoue, et
dans lequel la réalisation de la procédure de connexion comporte :
la transmission des informations d'utilisateur à la passerelle (200) lorsque l'application est commandée pour générer un paquet transmis à un serveur de contenu ;
la réception d'un résultat d'authentification d'utilisateur déterminé sur la base des informations d'utilisateur à partir de la passerelle (200) ;
la transmission des informations de serveur à la passerelle (200) lorsque le résultat d'authentification d'utilisateur réussit ; et
la réception du résultat de connexion au serveur (400, 500) à partir de la passerelle (200).

14. Terminal (100) selon la revendication 13, dans lequel le programme comporte en outre des instructions
libérant la procédure de connexion à la passerelle (200) et transmettant un message demandant une libération d'authentification de service d'agrégation multi-net au serveur d'authentification (300), lorsque le résultat d'authentification d'utilisateur comporte un rejet de l'utilisation du service d'agrégation multi-net.

15. Terminal (100) selon la revendication 13, dans lequel le programme comporte en outre des instructions
accédant au serveur (400, 500) à travers la route par défaut, lorsque le résultat d'authentification d'utilisateur comporte au moins l'un(e) parmi une erreur trouvée à l'analyse syntaxique d'une valeur incluse dans les informations d'utilisateur, un rejet de la valeur incluse dans les informations d'utilisateur, et un rejet d'un nom de bloc de service inclus dans les informations d'utilisateur.
